# EUROPÄISCHE PATENTSCHRIFT

(11) **EP 1 514 732 B1**
(45) Veröffentlichungstag und Bekanntmachung des Hinweises auf die Patenterteilung: **19.07.2006**
(21) Anmeldenummer: 04021623.6
(22) Anmeldetag: 10.09.2004
(51) Int. Cl.: B60R 1/06, B60R 1/07

(54) **Rückspiegelanordnung für Fahrzeuge, insbesondere Nutzfahrzeuge**
Rear view mirror assembly for vehicles, in particular for commercial vehicles
Assemblage de rétroviseur pour des véhicules, en particulier pour des véhicules utilitaires

(30) Priorität: 10.09.2003 DE 10341818
(43) Veröffentlichungstag der Anmeldung: 16.03.2005
(73) Patentinhaber: MEKRA Lang GmbH & Co. KG, 90765 Fürth (DE)
(72) Erfinder: Centmayer, Stefan, 91465 Ergersheim (DE); Lang, Heinrich, 91465 Ergersheim (DE); Seiboth, Wolfgang, 91438 Bad Windsheim (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 090 909
- US-B1- 6 340 231

## Beschreibung

Die vorliegende Anmeldung betrifft eine Rückspiegelanordnung für Fahrzeuge, insbesondere für Nutzfahrzeuge, mit einer motorischen Stelleinheit.

Zur Verstellung von Außenspiegeln bei Fahrzeugen sind prinzipiell zwei Konzepte bekannt: zum einen kann eine Glasträgerplatte mit einem darauf angeordneten Spiegelglas relativ zu einem diese umgebenden Gehäuse durch eine motorische Stelleinheit gedreht werden. Das Gehäuse bleibt dabei relativ zu einem Träger des Fahrzeugs, an dem die gesamte Rückspiegelanordnung befestigt ist, ortsfest. Solche Rückspiegelanordnungen sind beispielsweise in der EP 0 449 056 B1 beschrieben.

Zum anderen kann die Glasträgerplatte zusammen mit dem Gehäuse gegenüber dem Träger des Fahrzeugs gedreht werden. Eine solche Rückspiegelanordnung ist beispielsweise aus der EP 0 306 728 B1 bekannt. Bei dieser ist wie bei den meisten Rückspiegelanordnungen dieses Konzepts eine Grundplatte an dem Träger des Fahrzeugs befestigt. Zwischen der Grundplatte und dem Gehäuse, an dem das Speieglglas direkt befestigt ist, ist eine Stelleinheit angeordnet. Diese dreht das Gehäuse mitsamt des daran befestigten Spiegelglases relativ zur Grundplatte zum damit zum Träger des Fahrzeugs.

Nachteilig bei einer solchen Anordnung ist die relativ große Bauhöhe des Gehäuses, die zur Aufnahme der Grundplatte und der Stelleinheit erforderlich ist. Sie vergrößert nicht nur Gewicht und Windwiderstand, sondern schränkt auch das Sichtfeld ein.

Hierzu schlägt die EP 0 090 909 A2 vor, die Stelleinheit direkt, d.h. ohne zwischengeordnete Grundplatte, an dem Träger des Fahrzeugs zu befestigten. Dies löst o.g. Probleme.

Auch bei dieser Rückspiegelanordnung ist jedoch das Spiegelglas direkt am Gehäuse befestigt. Eine solche Anordnung bedingt mehrere Nachteile:

Da das Spiegelglas direkt am Gehäuse befestigt ist, muß es bei einem Austausch des Gehäuses stets mit ausgetauscht werden. Auch ist es nicht möglich, zunächst die Stelleinheit mit Spiegelglas am Träger entsprechend des gewünschten Blickfeldes auszurichten, indem die Stelleinheit in entsprechender Stellung am Träger positioniert und anschließend das Gehäuse befestigt wird, da ja das Spiegelglas, das zur Einstellung des gewünschten Blickfeldes nötig ist, direkt am Gehäuse befestigt ist.

Darüber hinaus werden Vibrationen des Gehäuses, das meist aus steifem dünnen Kunststoff besteht und damit schwach gedämpfte Eigenfrequenzen aufweist, die im Betrieb des Fahrzeugs angeregt werden, direkt auf das am Gehäuse befestigte Spiegelglas übertragen, was u.a. zu unerwünschter Verzerrung des Spiegelbildes und Beschädigung der Spiegelglasbefestigung, die meist als Klebebefestigung ausgeführt ist, und einer eventuell direkt unter dem Spiegelglas angeordneten Spiegelheizung führt.

Schließlich muß das Gehäuse auch ausreichend stabil ausgeführt sein, um das Gewicht des Spiegelglases samt eventueller Glasträgerplatte und Spiegelheizung zu tragen. Dies bedingt nicht nur ein höheres Gewicht und Volumen, sondern schränkt auch die Gestaltungsfreiheit im Hinblick auf aerodynamische und ästhetische Gesichtspunkte stark ein.

Ausgehend von diesem Stand der Technik ist es daher Aufgabe der vorliegenden Erfindung, eine Rückspiegelanordnung zur Verfügung zu stellen, bei der Vibrationen des Gehäuses nicht auf das Spiegelglas übertragen werden.

Diese Aufgabe wird erfindungsgemäß durch den Gegenstand des Anspruchs 1 gelöst.

Eine Rückspiegelanordnung für Fahrzeuge, insbesondere für Nutzfahrzeuge umfaßt eine Glasträgerplatte, auf der ein Spiegelglas angeordnet ist, eine Stelleinheit mit einer Basis, die direkt an einem Träger des Fahrzeugs befestigbar ist, und einer Plattform, die gegenüber der Basis motorisch um wenigstens eine Achse drehbar ist, sowie ein Gehäuse, wobei sowohl die Glasträgerplatte als auch das Gehäuse direkt an der Plattform befestigt sind.

Da die Glasträgerplatte mit darauf angeordnetem Spiegelglas direkt an der Stelleineheit befestigt ist, die in der Regel dämpfende Elemente umfaßt, massiv ausgeführt und daher vibrationsarm ist, werden Vibrationen des Gehäuses nicht direkt auf das Spiegelglas übertragen.

Somit verbessert sich nicht nur das Spiegelbild, auch kann das Gehäuse wesentlich freier gestaltet werden, da es nicht mehr das Spiegelglas tragen muß.

Weiters können nun Gehäuse und Spiegelglas separat montiert bzw. ausgetauscht werden. Dies ermöglicht insbesondere, zunächst die Stelleinheit mit vormontiertem Spiegelglas am Träger des Fahrzeugs zu befestigen und hierbei die Anordnung entsprechend des gewünschten Blickfeldes zu positionieren (etwa in der Neutralstellung oder einer Maximalauslenkung der Stelleinheit) und das Blickfeld im Spiegelglas zu kontrollieren. Anschließend kann das Gehäuse montiert werden, das dann evtl. Einstelleingriffe der Stelleinheit zur Positionierung abdeckt.

Hierzu kann die Basis der Stelleinheit am Träger des Fahrzeugs in beliebiger Position befestigbar sein. Dabei kann die Befestigung in an sich bekannter Weise mittels Form- und/oder Reibschluß am Träger des Fahrzeugs erfolgen. Insbesondere kann die Stelleinheit weiters ein Gegenstück umfassen, welches durch Verspannen gegen die Basis diese am Träger des Fahrzeugs befestigt. Bezüglich der Befestigung der Basis als auch bezüglich der Stelleinrichtung wird weiters auf die EP 0 090 909 A2 verwiesen, deren Inhalt ausdrücklich in die Offenbarung der vorliegenden Erfindung einbezogen wird.

Die Glasträgerplatte und/oder das Gehäuse können durch lösbare Befestigungsmittel, insbesondere durch Schrauben und/oder Klippverbindungen an der Plattform befestigt sein. Zur Befestigung mittels Klippverbindung wird auch auf die EP 1 186 473 A2 verwiesen, deren Inhalt diesbezüglich ausdrücklich in die Offenbarung der vorliegenden Erfindung einbezogen wird.

Gleichermaßen ist es möglich, die Glasträgerplatte und/oder das Gehäuse unlösbar, insbesondere durch Nieten und/oder Kleben an der Plattform befestigen.

Die Stelleinheit kann gegenüber der Basis auch um wenigstens zwei, insbesondere zueinander senkrechte, Achse drehbar sein. Sie kann einen oder mehrere Motoren umfassen, die vorzugsweise vom Fahrer mittels Schalter verstellbar sein können. Besonders bevorzugt sind Elektromotoren, die mittels elektrischer Leitungen oder mittels Fernsteuerung steuerbar sein können. Hierdurch ist es dem Fahrer vorteilhaft möglich, das Blickfeld des Spiegels in wenigstens einer Ebene einzustellen, während er sich in der Position befindet, für die das Blickfeld geeignet sein soll.

Weitere Aufgaben, Merkmale und Vorteile der vorliegenden Erfindung ergeben sich aus den Unteransprüchen und den nachfolgend beschriebenen Ausführungsbeispielen. Hierzu zeigt:

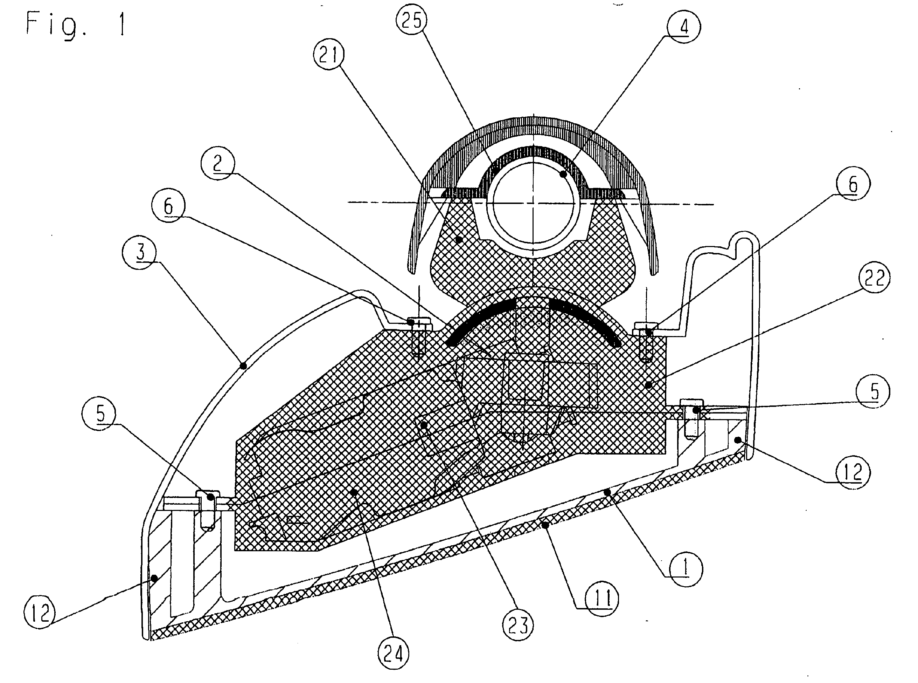

Fig. 1 eine Rückspiegelanordnung gemäß einer ersten Ausführung der vorliegenden Erfindung im Schnitt; und
Fig. 2 eine Rückspiegelanordnung gemäß einer zweiten Ausführung der vorliegenden Erfindung im Schnitt.

Eine Rückspiegelanordnung gemäß einer ersten Ausführung der vorliegenden Erfindung umfaßt eine Stelleinheit 2 mit einer Basis 21 und einer an dieser drehbare befestigten Plattform 22. Diese ist gegenüber der Basis 21 mittels zweier elektrischer Stellmotoren 23 bzw. 24 um zwei zueinander senkrechte Achsen drehbar. Die Stellmotoren 23 bzw. 24 werden vom Fahrer mittels Schaltern oder dergleichen angesteuert, die mit den Stellmotoren über Steuerleitungen verbunden sind (nicht dargestellt). Die Stellmotoren sowie der Aufbau der Stelleinheit einschließlich eventueller Getriebe sind aus dem Stand der Technik bekannt und sind daher hier nur schematisch angedeutet. Jedoch erkennt man bereist in der schematischen Darstellung, daß die Plattform in der hier dargestellten bevorzugten Ausführung zur Aufnahme der Motoren 23, 24 zweigeteilt ist und mittels Schrauben 5 zusammengefügt wird.

Die Basis 21 der Stelleinheit 2 ist an einem Träger 4 eines Fahrzeugs (nicht dargestellt) befestigt, indem ein Gegenstück 25 gegenüber der Basis 21 verspannt ist und so den Träger 4 reibschlüssig klemmt. Die Verspannung kann, wie dargestellt, beispielsweise dadurch erfolgen, daß das Gegenstück 25 formschlüssig mit der Basis 21 verbunden wird, wobei eine Öffnung zwischen beiden bestehen bleibt, die an sich kleiner als der Träger 4 ist. Der in diese Öffnung eingelegt Träger 4 verformt das Gegenstück 25 elastisch, so daß es gegenüber der Basis verspannt ist und gleichzeitig den Träger klemmt. Vorteilhafterweise kann die Rückspiegelanordnung so in jeder beliebigen Winkellage bezüglich dem rotationssymmetrischen Träger 4 festgelegt werden.

Gleichermaßen kann in einer (nicht dargestellten) weiteren Ausführung der vorliegenden Erfindung das Gegenstück 25 mit der Basis 21 durch wenigstens zwei auf einander gegenüberliegenden Seiten des Trägers 4 angeordneten Schrauben verschraubt sein, wobei Gegenstück und Basis bei voll eingeschraubten Schrauben wiederum eine Öffnung aufweisen, die an sich kleiner als der Träger 4 ist.

Auch andere Befestigungen, beispielsweise Schrauben, Kleben, Einrasten in entsprechen geformte Rastverbindungen, sind denkbar.

An der Plattform 22 ist zum einen eine Glasträgerplatte 1 mittels Schrauben 5 direkt befestigt. Auf der Glasträgerplatte 1 ist ein Spiegelglas 11 mittels Kleben befestigt. In einer (nicht dargestellten) Ausführung kann zwischen Spiegelglas und Glasträgerplatte eine Spiegelheizung angeordnet sein.

Ebenfalls direkt an der Plattform 22 ist ein Gehäuse 3 mittels Schrauben 6 befestigt. Dieses ist so ausgebildet, daß es in montiertem Zustand mit Vorsprüngen 12 der Glasträgerplatte über dem gesamten Umfang bündig abschließt und so verhindert, daß Schmutz oder Feuchtigkeit in das Innere der Rückspiegelanordnung gelangen und die Stelleinheit 2, insbesondere die Motoren 23, 24 beeinträchtigen. Gleichermaßen kann (in einer nicht dargestellten Ausführung) das Gehäuse 3 auch direkt, d.h. ohne Vorsprünge 12, an dem Spiegelglas 11 anliegen. Die Vorsprünge 12 stabilisieren jedoch zusätzlich das Gehäuse. Zur Abdichtung und/oder Vibrationsdämpfung kann ein Dichtmittel, etwa eine umlaufende Gummidichtung, am inneren, den Vorsprüngen 12 zugewandten Umfang angeordnet sein (nicht dargestellt).

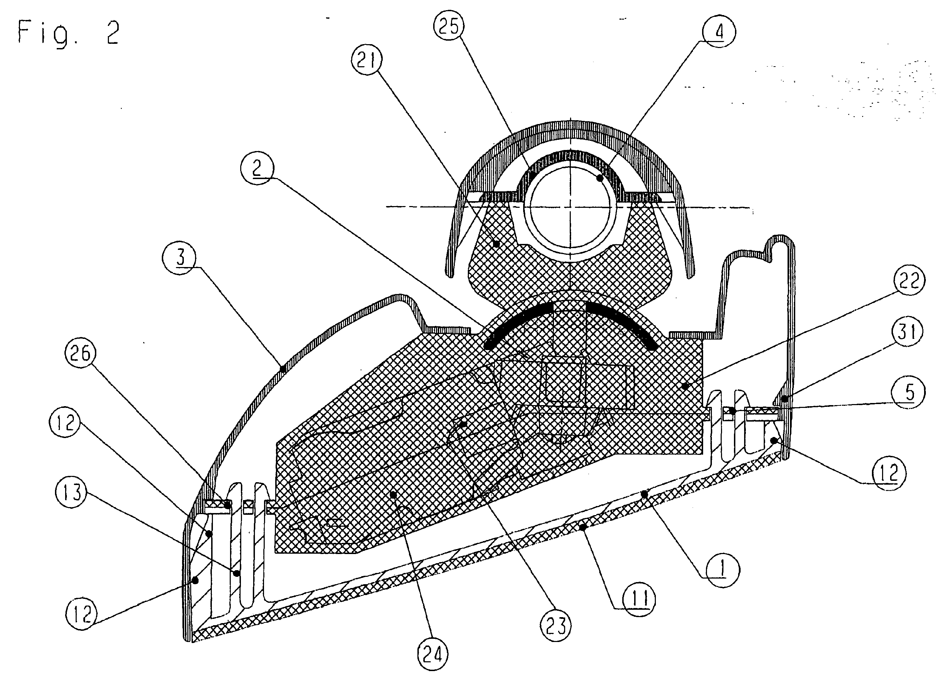

Fig. 2 zeigt eine Rückspiegelanordnung gemäß einer zweiten Ausführung der vorliegenden Erfindung. Diese unterscheidet sich von der ersten Ausführung nur dadurch, daß sowohl Glasträgerplatte 1 als auch Gehäuse 3 mittels Klippbefestigungen an der Plattform 22 befestigt sind.

Hierzu weist die Glasträgerplatte 1 Befestigungsclips 13 auf, die in entsprechend geformte Bohrungen 26 der Plattform unter Formschluß einrasten. Befestigungsclips 13 und Vorsprünge 12 des Glasträgerplatte sind dabei so ausgebildet, daß sie bei Eingriff der Befestigungsclips 13 in die Bohrungen 26 leicht elastisch verformt werden und so Glasträgerplatte und Plattform aneinander festlegen.

In ähnlicher Weise weist das Gehäuse 3 Befestigungsbereiche 31 auf, die unter Formschluß in die Plattform 21 eingreifen, so daß Gehäuse und Plattform aneinander festgelegt sind.

Durch solche Klippverbindungen, wie sie nach dem Stand der Technik bekannt sind, ist es vorteilhaft möglich, Gehäuse bzw. Glasträgerplatte rasch und ohne Werkzeug zu (de)montieren.

## Patentansprüche

1. Rückspiegelanordnung für Fahrzeuge, insbesondere für Nutzfahrzeuge, mit einer Glasträgerplatte (1), auf der ein Spiegelglas (11) angeordnet ist;
einer Stelleinheit (2) mit
einer Basis (21), die direkt an einem Träger (4) des Fahrzeugs befestigbar ist, und
einer Plattform (22), die gegenüber der Basis motorisch (23, 24) um wenigstens eine Achse drehbar ist; und
einem Gehäuse (3);
**dadurch gekennzeichnet, daß**
sowohl die Glasträgerplatte als auch das Gehäuse direkt an der Plattform befestigt sind.

2. Rückspiegelanordnung nach Anspruch 1, **dadurch gekennzeichnet, daß** die Plattform der Stelleinheit gegenüber der Basis um wenigstens zwei, insbesondere zueinander senkrechte, Achse drehbar ist.

3. Rückspiegelanordnung nach einem der vorhergehenden Ansprüche, **dadurch gekennzeichnet, daß** die Basis der Stelleinheit am Träger des Fahrzeugs in beliebiger Position befestigbar ist.

4. Rückspiegelanordnung nach einem der vorhergehenden Ansprüche, **dadurch gekennzeichnet, daß** die Basis der Stelleinheit mittels Form- und/oder Reibschluß am Träger des Fahrzeugs befestigbar ist.

5. Rückspiegelanordnung nach einem der vorhergehenden Ansprüche, **dadurch gekennzeichnet, daß** die Stelleinheit weiters ein Gegenstück umfaßt, welches durch Verspannen gegen die Basis diese am Träger des Fahrzeugs befestigt.

6. Rückspiegelanordnung nach einem der vorhergehenden Ansprüche, **dadurch gekennzeichnet, daß** die Glasträgerplatte und/oder das Gehäuse durch lösbare Befestigungsmittel, insbesondere durch Schrauben und/oder Klippverbindungen an der Plattform befestigt sind.

7. Rückspiegelanordnung nach einem der vorhergehenden Ansprüche, **dadurch gekennzeichnet, daß** die Glasträgerplatte und/oder das Gehäuse durch unlösbare Befestigungsmittel, insbesondere durch Nieten und/oder Klebeverbindungen an der Plattform befestigt sind.

## Claims

1. A rearview mirror arrangement for vehicles, in particular for utility vehicles, comprising a glass carrier plate (1) having a mirror pane (11) arranged thereon;
an actuation unit (2) comprising
a base (21) adapted to be mounted directly to a support (4) of the vehicle, and
a platform (22) adapted to be motorically (23, 24) rotated about at least one axis relative to the base; and
a housing (3);
**characterized in that**
both the glass carrier plate and the housing are mounted directly on the platform.

2. The rearview mirror arrangement according to claim 1, **characterized in that** the platform of the actuation unit may be rotated relative to the base about at least two axes that are in particular perpendicular to each other.

3. The rearview mirror arrangement according to any one of the preceding claims, **characterized in that** the base of the actuation unit may be mounted on the carrier of the vehicle in any desired position.

4. The rearview mirror arrangement according to any one of the preceding claims, **characterized in that** the base of the actuation unit may be mounted on the carrier of the vehicle by positive and/or frictional engagement.

5. The rearview mirror arrangement according to any one of the preceding claims, **characterized in that** the actuation unit further comprises a counterpart mounting the latter on the carrier of the vehicle by locking with the base.

6. The rearview mirror arrangement according to any one of the preceding claims, **characterized in that** the glass carrier plate and/or the housing are mounted on the platform by releasable fastening means, in particular by screws and/or clip connections.

7. The rearview mirror arrangement according to any one of the preceding claims, **characterized in that** the glass carrier plate and/or the housing are mounted on the platform by non-releasable fastening means, in particular by rivets and/or bonded connections.

## Revendications

1. Assemblage de rétroviseur pour des véhicules, en particulier pour des véhicules utilitaires, avec une plaque support de verre (1), sur laquelle est disposée un verre de miroir (11) ;
une unité de réglage (2), avec
une base (21), susceptible d'être fixée directement sur le support (4) du véhicule, et
une plate-forme (22), susceptible de tourner autour d'au moins un axe par rapport à la base (23, 24), à l'aide d'un moteur ; et
un boîtier (3) ;
**caractérisé en ce que**
tant la plaque support de verre, qu'également le boîtier sont fixés directement à la plateforme.

2. Assemblage de rétroviseur selon la revendication 1, **caractérisé en ce que** la plateforme de l'unité de réglage est susceptible de tourner par rapport à la base, autour d'au moins deux axes, en particulier perpendiculaires entre eux.

3. Assemblage de rétroviseur selon l'une des revendications précédentes, **caractérisé en ce que** la base de l'unité de réglage est susceptible d'être fixée en une position quelconque sur le support du véhicule.

4. Assemblage de rétroviseur selon l'une des revendications précédentes, **caractérisé en ce que** la base de l'unité de réglage est susceptible d'être fixée au moyen d'une liaison à ajustement de forme et/ou à friction sur le support du véhicule.

5. Assemblage de rétroviseur selon l'une des revendications précédentes, **caractérisé en ce que** l'unité de réglage comprend en outre une pièce conjugué, qui, par bridage contre la base, fixe celle-ci sur le support du véhicule.

6. Assemblage de rétroviseur selon l'une des revendications précédentes, **caractérisé en ce que** la plaque support en verre et/ou le boîtier sont fixés sur la plateforme, à l'aide de moyens de fixation désolidarisables, en particulier par vissage et/ou des liaisons à encliquetage.

7. Assemblage de rétroviseur selon l'une des revendications précédentes, **caractérisé en ce que** la plaque support de verre et/ou le boîtier sont fixés sur la plateforme, à l'aide de moyens de fixation indésolidarisables, en particulier par rivetage et/ou par des liaisons collées.
